# EUROPEAN PATENT APPLICATION

(11) **EP 2 615 213 A2**
(43) Date of publication of application: **17.07.2013**
(21) Application number: 12197464.6
(22) Date of filing: 17.12.2012
(51) Int. Cl.: E02F 9/20, F02N 11/08, F15B 21/04, F02D 41/04, F04B 17/05, F04B 49/22

(54) **Engine control system for preventing the automatic stop of the engine of a construction machine in case of low outside temperature**

(30) Priority: 11.01.2012 JP 2012003295
(71) Applicant: Hitachi Construction Machinery Co., Ltd., Bunkyo-ku, Tokyo 112-8563 (JP)
(72) Inventor: Ezawa, Masanori, Tsuchiura-shi, Ibaraki 300-0013 (JP); Arai, Yasushi, Tsuchiura-shi, Ibaraki 300-0013 (JP); Kamiya, Shouhei, Tsuchiura-shi, Ibaraki 300-0013 (JP)
(74) Representative: Jansen, Cornelis Marinus

(57) **Abstract**

Disclosed is an engine control system for a construction machine having an engine and a control device for controlling, via a directional control valve, a flow of pressure oil to be fed to a hydraulic actuator. The system is provided with a controller, which includes a manipulation state determination unit for the control device and an idle stop control unit for performing idle stop control when the control device is determined to have remained unmanipulated. The system also includes a temperature sensing device for a fluid relevant to the operation of the engine. The controller includes a unit for determining whether or not the temperature of the fluid is not higher than a predetermined temperature. When the temperature of the fluid is determined to be not higher than the predetermined temperature, the controller disables the idle stop control.

## Description

### CROSS-REFERENCE TO RELATED APPLICATION

This application claims the priority of Japanese Patent Application 2012-003295 filed January 11, 2012, which is incorporated herein by reference.

### BACKGROUND OF THE INVENTION

### 1. Field of the Invention

This invention relates to an engine control system for a construction machine such as a hydraulic excavator, which after a predetermined time from the commencement of an idle operation state, can perform idle stop control that automatically stops an operation of an engine.

### 2. Description of the Related Art

As a conventional technology of this kind, an engine control system for a working machine is disclosed in JP-A-2003-65097. This conventional technology is equipped with a controller. This controller automatically stops an operation of an engine when a single-touch operation pushbutton switch, that is, an idle stop switch is operated during idling of the engine, and also performs idle stop control to automatically stop the operation of the engine when a state in which a control lever remains unmanipulated has continued longer than a predetermined time.

### SUMMARY OF THE INVENTION

With the above-mentioned conventional technology, a problem however tends to arise when the working machine is placed under a work environment of low temperature to perform work. Under such a work environment of low temperature, the temperature of air is low, and as a consequence, the temperature of working oil for driving a hydraulic actuator, the temperature of engine coolant for cooling the engine and the temperature of fuel for the engine are lowered, so that the engine is prone to cooling. When the idle stop switch is operated and the control lever is returned from a manipulated position, where work is being performed, to a neutral position to temporarily stop the work, the above-mentioned conventional technology brings the engine to an idle operation state in which the rpm of the engine is a predetermined low rpm, and after an elapse of a predetermined time, performs idle stop control to stop the operation of the engine even under such a work environment of low temperature.

Under a work environment of low temperature, however, an engine is hard to start when an attempt is made to start the engine for the resumption of work after a while from stopping an operation of the engine as mentioned above, because the engine has been cooled. Therefore, a longer cranking time is needed from an operation of a starter switch by an engine key until a start-up of the engine. Moreover, working oil of low temperature has a high viscosity, and therefore, needs a greater torque for driving a hydraulic pump so that a greater load is exerted on the engine. In addition, fuel of low temperature leads to solidification of wax components contained in the fuel, thereby inducing such wax components to deposit on a fuel filter, and hence, lowering the feed capability of fuel to the engine. Due to these causes, the engine becomes hard to start as mentioned above.

With the conventional technology, a longer cranking time is needed as mentioned above when desired to resume the discontinued work under a work environment of low temperature after idle stop control was performed. Therefore, a greater power consumption is needed in connection with this start-up of the engine, and an economical problem arises. Furthermore, a longer cranking time is required until the work can be resumed, leading to problems that a sense of uncertainty is given to the operator and the work efficiency tends to decrease.

With the above-mentioned actual situation of the conventional technology in view, the present invention has as an object thereof the provision of an engine control system for a construction machine, which can save a power consumption relevant to a start-up of an engine under a work environment of low temperature and can also promptly resume work after the work is once stopped temporarily.

Toachievetheabove-describedobject,thepresent invention is **characterized in that** in an engine control system for a construction machine provided with an engine, a hydraulic pump drivable by the engine, a hydraulic actuator drivable by pressure oil delivered from the hydraulic pump, a directional control valve for controlling a flow of pressure oil to be fed from the hydraulic pump to the hydraulic actuator, and a control device for switchingly controlling the directional control valve, and said engine control system being provided with a controller, which includes a manipulation state determination unit for determining a manipulation state of the control device and an idle stop control unit for performing idle stop control to stop an operation of the engine when the control device is determined to have remained unmanipulated for a predetermined time at the manipulation state determination unit, the engine control system is provided with a temperature sensing device for detecting a temperature of a fluid relevant to the operation of the engine, the controller comprises a temperature determination unit for determining whether or not the temperature of the fluid as detected by the temperature sensing device is not higher than a predetermined temperature set beforehand, and, when the temperature of the fluid is determined to be not higher than the predetermined temperature at the temperature determination unit, the controller performs processing to disable the idle stop control by the idle stop control unit.

According to the present invention constructed as described above, the controller performs processing to forcibly disable idle stop control when the construction machine has performed work under a work environment of low temperature that is considered to pose a problem on a start-up of the engine, the control device is determined to have remained unmanipulated for the predetermined time at the manipulation state determination unit of the controller and a temperature detected by the temperature sensing device is determined to be not higher than the predetermined temperature at the temperature determination unit of the controller, although under such conditions, idle stop control is about to be performed.

Even when the control device is returned to a neutral position to once stop work temporarily from a manipulated position where the work is being performed, the operation of the engine, therefore, continues without stopping. As a consequence, the present invention obviates restarting the engine, and moreover, guides working oil, engine coolant and engine fuel into circuits, whereby the engine is kept warm to prevent cooling of the engine which would otherwise occur due to the environment of low temperature. In other words, the present invention does not require to restart the engine upon resumption of work subsequent to its discontinuation even under a work environment of low temperature that is considered to pose a problem on a start-up of the engine, and therefore, can save a power consumption associated with an operation of a starter switch and can also promptly resume work after it is once stopped temporarily.

The present invention may also be **characterized in that** in the above-described invention, the controller is provided with an idle operation control unit for holding an rpm of the engine at an idle rpm, which is a predetermined low rpm, when the control device is determined by the manipulation state determination unit to have been brought from a manipulated state to an unmanipulated state, and the idle stop control unit performs processing to stop the operation of the engine when the control device is determined by the manipulation state determination unit to have been unmanipulated for a predetermined time from a start of idle operation control by the idle operation control unit.

According to the present invention constructed as described immediately above, when the control device is returned to the neutral position to once stop work temporarily from a manipulated position where the work is being performed, the engine moves to an idle operation by the idle operation control unit of the controller, and the idle operation is continued until the work is resumed next. When the control device is manipulated again from the neutral position in such a situation, the actual rpm of the engine promptly increases according to a target rpm for the engine, thereby making it possible to perform work as desired.

The present invention may also be **characterized in that** in the above-described invention, the fluid comprises working oil for driving the hydraulic actuator, and the temperature sensing device comprises a temperature sensor for detecting a temperature of the working oil.

The present invention may also be **characterized in that** in the above-described invention, the fluid comprises engine coolant for cooling the engine, and the temperature sensing device comprises a temperature sensor for detecting a temperature of the engine coolant.

The present invention may also be **characterized in that** in the above-described invention, the fluid comprises fuel for the engine, and the temperature sensing device comprises a temperature sensor for detecting a temperature of the fuel.

The present invention may also be **characterized in that** in the above-described invention, the fluid comprises air in a work environment where the construction machine is placed, and the temperature sensing device comprises a temperature sensor for detecting a temperature of the air to be introduced into an intake pipe of the engine.

The present invention is constructed such that the temperature sensing device is provided for detecting the temperature of the fluid relevant to the operation of the engine, the controller includes the temperature determination unit for determining whether or not the temperature of the fluid as detected by the temperature sensing device is not higher than the predetermined temperature set beforehand and considered to pose a problem on a start-up of the engine, and, when the temperature of the fluid is determined to be not higher than the predetermined temperature at the temperature determination unit, the controller performs processing to disable the idle stop control by the idle stop control unit.
Owing to this construction, the present invention can save a power consumption relevant to a start-up of the engine under a work environment of low temperature, can assure excellent economy compared with before, can promptly resume work after the work is once stopped temporarily, can eliminate a sense of uncertainty conventionally tended to be given to the operator, and compared with before, can also improve the efficiency of work to be performed by the construction machine.

### BRIEF DESCRIPTION OF THE DRAWINGS

FIG. 1 is a side view showing a hydraulic excavator mentioned as one example of a construction machine on which an embodiment of the engine control system according to the present invention is arranged.

FIG. 2 is an electrical and hydraulic circuit diagram illustrating the embodiment of the engine control system according to the present invention.

FIG. 3 is a flow chart depictingprimaryprocessing steps to be executed at a controller arranged in the embodiment.

### DETAILED DESCRIPTION OF PREFERRED EMBODIMENT

The embodiment of the engine control system according to the present invention for the construction machine will hereinafter be described with reference to the accompanying drawings.

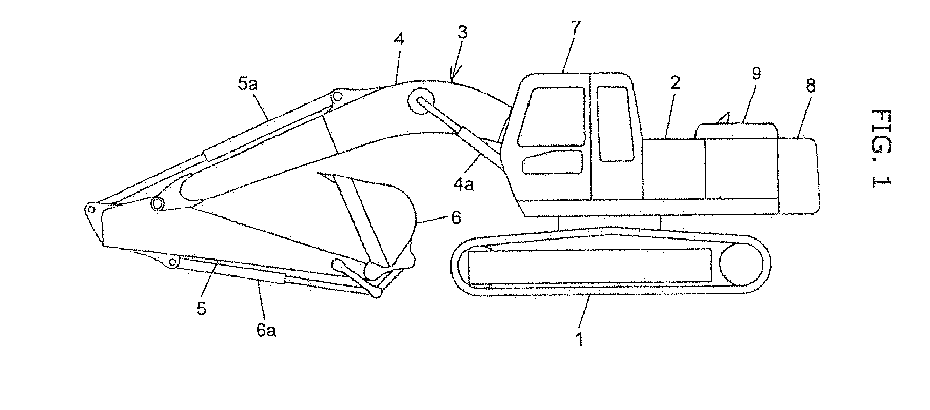

The construction machine on which the engine control system according to this embodiment is arranged is, for example, a hydraulic excavator shown in FIG. 1. This hydraulic excavator is provided with a travel base 1, a revolving upperstructure 2 mounted on the travel base 1, and working equipment 3 attached pivotally in an up-and-down direction to the revolving upperstructure 2. The working equipment 3 includes a boom 4 attached to the revolving upperstructure 2, an arm 5 connected to a free end of the boom 4, and a bucket 6 connected to a free end of the arm 5. The working equipment 3 also includes a boom cylinder 4a for actuating the boom 4, an arm cylinder 5a for actuating the arm 5, and a bucket cylinder 6a for actuating the bucket 6. An operator's cab 7 is arranged at a front-side position of the revolving upperstructure 2, a counterweight 8 is arranged at a rear-side position of the revolving upperstructure 2, and an engine compartment 9 is arranged between the operator's cab 7 and the counterweight 8.

The engine control system according to this embodiment, which is arranged on the hydraulic excavator shown in FIG. 1, is provided with an engine 11 arranged in the engine compartment 9 and a hydraulic pump 12 drivable by the engine 11. Also provided are a working oil reservoir 13 for storing working oil to be fed to the hydraulic pump 12, a hydraulic actuator 14 collectively representing the above-mentioned boom cylinder 4a, arm cylinder 5a and the like all of which are drivable by pressure oil delivered from the hydraulic pump 12, and a directional control valve 15 for controlling a flow of pressure oil to be fed from the hydraulic pump 12 to the hydraulic actuator 14.

In the operator's cab 7, a control device 16 is arranged. The control device 16 has a control lever 16a to switchingly operate the directional control valve 15. This embodiment is also provided with a temperature sensing device for detecting a temperature of a fluid relevant to an operation of the engine 11, for example, a temperature sensor 20 for detecting a temperature of the working oil, a pressure sensor 21 for detecting whether or not the control lever 16a of the control device 16 has been manipulated, an instruction unit for outputting an instruction signal that indicates performance or non-performance of idle stop control to be mentioned subsequently herein, for example, an idle stop switch 22, and an rpm instructing device 23 for instructing a target rpm for the engine 11.

This embodiment is further provided with a control unit to be inputted with signals outputted from the temperature sensor 20, pressure sensor 21, idle stop switch 22 and rpm instructing device 23, specifically a controller 17.

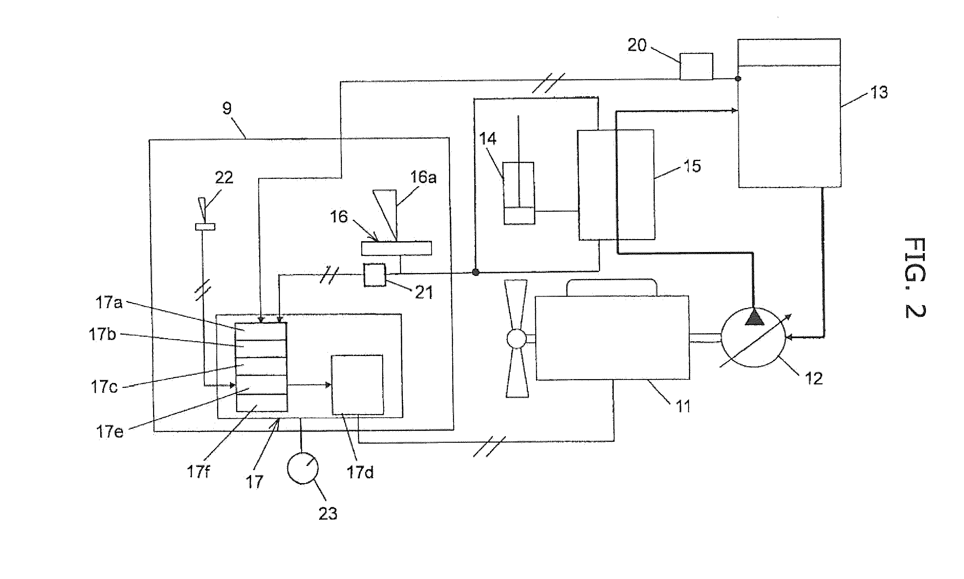

As illustrated in FIG. 2, the controller 17 includes a neutral determination unit 17a, an idle operation control unit 17b, a manipulation determination unit 17c, and an idle stop control unit 17d. The neutral determination unit 17a determines, based on a signal outputted from the pressure sensor 21, whether or not the control device 16 has been returned from a manipulated position to a neutral position. The idle operation control unit 17b holds the rpm of the engine 11 at an idle rpm, which is a predetermined low rpm, when the control device 16 is determined to have been returned to the neutral position at the neutral determination unit 17a. Based on signals outputted from the pressure sensor 21 during a predetermined time from a commencement of idle operation control by the idle operation control unit 17b, the manipulation determination unit 17c determines whether or not the control device 16 has been manipulated. The idle stop control unit 17d performs processing to stop the operation of the engine 11 when the control device 16 is determined to have remained unmanipulated during the predetermined time at the manipulation determination unit 17c. It is to be noted that the manipulation state determination unit, which determines the manipulation state of the control device 16, is made up by the above-mentioned neutral determination unit 17a and manipulation determination unit 17c.

The controller 17 also includes an idle stop determination unit 17e for determining, according to a signal outputted from the idle stop switch 22, performance or non-performance of idle stop control by the idle stop control unit 17d.

The controller 17 further includes a temperature determination unit 17f. When the performance of idle stop control by the idle stop control unit 17d has been determined at the idle stop determination unit 17e and the control device 16 is determined to have been returned to the neutral position at the neutral determination unit 17a, the temperature determination unit 17f determines whether or not the temperature of the working oil as detected by the temperature sensor 20 is not higher than the predetermined low temperature set beforehand and considered to pose a problem on a start-up of the engine 11, for example, 0°C. When the temperature of the working oil is determined to be not higher than the predetermined low temperature at the temperature determination unit 17f, the controller 17 performs processing to disable idle stop control by the idle stop control unit 17d.

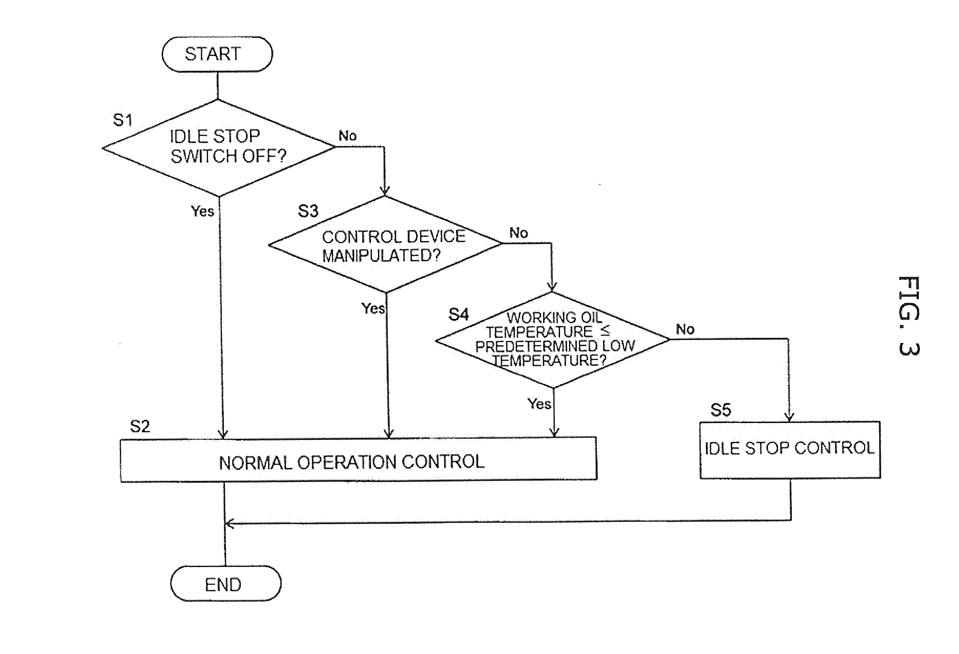

With reference to FIG. 3, a description will be made of primary processing steps to be executed at the controller 17 in this embodiment, which is constructed as described above.

Upon performing digging work or the like by the hydraulic excavator, the idle stop switch 22 is held OFF or is switched to ON. According to a signal outputted from the idle stop switch 22, the idle stop determination unit 17e of the controller 17 determines whether the performance or non-performance of idle stop control has been instructed (step S1). When the idle stop switch 22 is OFF and the non-performance of idle stop control has been instructed, normal operation control is performed (step S2) Described specifically, when the control lever 16a of the control device 16 is returned from a manipulated position to the neutral position, the idle operation control unit 17b controls, based on the determination by the neutral determination unit 17a, to bring the rpm of the engine 11 to an idle rpm, and in this idle operation state, the operation of the engine 11 is continued. At this time, the idle stop control unit 17d is held to remain non-functioning.

When the above-mentioned determination in step S1 finds that the idle stop switch 22 is set ON and the performance of idle stop control has been instructed, the manipulation determination unit 17c determines, based on signals outputted from the pressure sensor 21, whether or not the control device 16 was manipulated during a predetermined time from the commencement of idle operation control by the idle operation control unit 17b (step S3). When the control device 16 is determined to have been manipulated, the routine moves to step S2, where normal operation control is performed. Described specifically, the engine 11 is operated such that the actual rpm of the engine 11 is brought to a target rpm for the engine 11 as instructed by the rpm instructing device 23. At this time, the directional control valve 15 is switched according to manipulation of the control device 16. Accordingly, pressure oil delivered from the hydraulic pump 12 is fed to the hydraulic actuator 14 via the directional control valve 15. The hydraulic actuator 14 is hence actuated to drive, for example, the working equipment 3 shown in FIG. 1 so that digging work or the like of earth or sand is performed. When the control lever 16a of the control device 16 is returned to the neutral position from such a manipulated position, the rpm of the engine 11 drops to an idle operation state and this idle operation state is continued, as mentioned above.

When by the above-mentioned determination in step S3, the control device 16 is determined to have remained unmanipulated, it is determined at the temperature determination unit 17f whether or not the temperature of the working oil as detected by the temperature sensor 20 is not higher than the predetermined low temperature, for example, 0°C (step S4). When, the temperature of the working oil is determined to be higher than the predetermined low temperature, that is, 0°C, the routine moves to step S5. In step S5, the idle stop control unit 17d functions to perform processing that stops the operation of the engine 11. In other words, idle stop control is performed. In this case, resumption of the work needs to restart the engine 11. As this restart of the engine 11 is performed in a work environment that the temperature of the working oil is held relatively high, the cranking time from an operation of the starter switch until a start-up of the engine 11 can be shortened so that no problem is imposed on the start-up of the engine 11.

When by the above-mentioned determination in step S4, the temperature of the working oil is determined to be not higher than the predetermined low temperature, for example, 0°C, it is indicated that the hydraulic excavator is placed under a work environment of low temperature to perform work. The routine then moves to step S2 to perform normal operation control. Described specifically, when the control lever 16a of the control device 16 is returned from the manipulated position to the neutral position, the rpm of the engine 11 is controlled to an idle rpm by the idle operation control unit 17b, and under this idle operation control, the operation of the engine 11 is continued. In other words, although the idle stop switch 22 is set ON to perform idle stop control, the idle stop control is forcibly disabled.

According to the embodiment constructed as described above, when the hydraulic excavator is under a work environment of low temperature and the control lever 16a is returned from a manipulated position, where work is being performed, to the neutral position to once stop the work temporarily, the engine 11 moves to an idle operation by the idle operation control unit 17b of the controller 17, and this idle operation is continued until the work is resumed next time. As a consequence, this embodiment can obviates restarting the engine 11, and moreover, can guide the working oil, engine coolant and fuel for the engine 11 into circuits, whereby cooling of the engine 11 due to the environment of low temperature is reduced. When the control lever 16a is manipulated again from the neutral position, the actual rpm of the engine 11, therefore, promptly increases according to a target rpm for the engine 11 so that desired work can be performed. Therefore, this embodiment does not require to restart the engine 11 upon resuming work after its temporary stop even under a work environment of low temperature that is considered to pose a problem on a start-up of the engine 11, and therefore, can save a power consumption associated with an operation of the starter switch and can assure excellent economy. Further, this embodiment can promptly resume work after it is once stopped temporarily, can eliminate a sense of uncertainty that is tended to be given to the operator, and can improve the efficiency of work to be performed by the hydraulic excavator.

In the above-described embodiment, the temperature sensor 20 for detecting the temperature of the working oil is arranged as the temperature sensing device for detecting the temperature of the fluid relevant to the operation of the engine 11. This invention shall, however, not be limited to such a construction. The present invention may be constructed, for example, such that idle stop control is disabled irrespective of an ON operation of the idle stop switch 22 when a temperature sensor for detecting that the temperature of the engine coolant is not higher than the predetermined low temperature, for example, 0°C is arranged as the temperature sensing device, the temperature of the engine coolant is determined at the temperature determination unit 17f of the controller 17 as to whether or not it is not higher than the predetermined low temperature, and the temperature of the engine coolant is determined to be not higher than the predetermined low temperature.

The present invention may also be constructed such that as the temperature sensing device, a temperature sensor for detecting that the temperature of the fuel for the engine 11 is not higher than the predetermined low temperature, for example, 0°C is arranged, the temperature of the fuel is determined at the temperature determination unit 17f of the controller 17 as to whether or not it is not higher than the predetermined low temperature, and idle stop control is disabled irrespective of an ON operation of the idle stop switch 22 when the temperature of the fuel is determined to be not higher than the predetermined temperature.

The present invention may also be constructed such that as the temperature sensing device, a temperature sensor for detecting that the temperature of air to be guided to an intake pipe of the engine 11, that is, the air in a work environment where the hydraulic excavator is placed is not higher than the predetermined low temperature, for example, 0°C is arranged, the temperature of the air is determined at the temperature determination unit 17f of the controller 17 as to whether or not it is not higher than the predetermined low temperature, and idle stop control is disabled irrespective of an ON operation of the idle stop switch 22 when the temperature of the air is determined to be not higher than the predetermined temperature.

## Claims

1. An engine control system for a construction machine provided with an engine, a hydraulic pump drivable by the engine, a hydraulic actuator drivable by pressure oil delivered from the hydraulic pump, a directional control valve for controlling a flow of pressure oil to be fed from the hydraulic pump to the hydraulic actuator, and a control device for switchingly controlling the directional control valve, and
said engine control system being provided with a controller, which includes a manipulation state determination unit for determining a manipulation state of the control device and an idle stop control unit for performing idle stop control to stop an operation of the engine when the control device is determined to have remained unmanipulated for a predetermined time at the manipulation state determination unit,
wherein the engine control system is provided with a temperature sensing device for detecting a temperature of a fluid relevant to the operation of the engine, the controller comprises a temperature determination unit for determining whether or not the temperature of the fluid as detected by the temperature sensing device is not higher than a predetermined temperature set beforehand, and, when the temperature of the fluid is determined to be not higher than the predetermined temperature at the temperature determination unit, the controller performs processing to disable the idle stop control by the idle stop control unit.

2. The engine control system according to claim 1, wherein:
the controller is provided with an idle operation control unit for holding an rpm of the engine at an idle rpm, which is a predetermined low rpm, when the control device is determined by the manipulation state determination unit to have been brought from a manipulated state to an unmanipulated state, and
the idle stop control unit performs processing to stop the operation of the engine when the control device is determined by the manipulation state determination unit to have been unmanipulated for a predetermined time from a start of idle operation control by the idle operation control unit.

3. The engine control system according to claim 1 or 2, wherein:
the fluid comprises working oil for driving the hydraulic actuator, and the temperature sensing device comprises a temperature sensor for detecting a temperature of the working oil.

4. The engine control system according to claim 1 or 2, wherein:
the fluid comprises engine coolant for cooling the engine, and the temperature sensing device comprises a temperature sensor for detecting a temperature of the engine coolant.

5. The engine control system according to claim 1 or 2, wherein:
the fluid comprises fuel for the engine, and the temperature sensing device comprises a temperature sensor for detecting a temperature of the fuel.

6. The engine control system according to claim 1 or 2, wherein:
the fluid comprises air in a work environment where the construction machine is placed, and the temperature sensing device comprises a temperature sensor for detecting a temperature of the air to be introduced into an intake pipe of the engine.
